# EUROPEAN PATENT APPLICATION

(11) **EP 4 803 857 A1**
(43) Date of publication of application: **09.09.2026**
(21) Application number: 25161329.5
(22) Date of filing: 03.03.2025
(51) Int. Cl.: G01B 21/32, F03D 17/00, G01D 3/036, G01L 1/22, G01B 7/16, G01B 11/16

(54) **A COMPUTER-IMPLEMENTED METHOD, A NON-TRANSITORY COMPUTER-READABLE STORAGE MEDIUM, AND A SYSTEM FOR CALCULATING TEMPERATURE-COMPENSATED STRAIN**

(71) Applicant: Polytech A/S, 6740 Bramming (DK)
(72) Inventor: NIELSEN, Jesper Find, 6740 Bramming (DK)
(74) Representative: Zacco Denmark A/S

(57) **Abstract**

The present invention relates to a computer-implemented method (200) for calculating (260) temperature-compensated strain of a body. The method (200) comprises during a time period (T), obtaining (220) time resolved strain measurement data by a strain sensor (110) arranged at the body and obtaining time resolved temperature measurement data by a temperature sensor (120) configured to measure a temperature of an environment surrounding the body. The method (200) comprises analysing (230) the time resolved strain measurement data and the time resolved temperature measurement data by a machine learning model (M) trained to identify (240) a relation between the time resolved strain measurement data and the time resolved temperature measurement data and to calculate (260) the temperature-compensated strain of the body.

## Description

### TECHNICAL FIELD

The present invention relates to a computer-implemented method for calculating temperature-compensated strain of a body and to a non-transitory computer-readable storage medium. The present invention also relates to a system for calculating temperature-compensated strain of a wind turbine component.

### BACKGROUND

Measuring strain in structures such as wind turbines is critical for monitoring structural integrity and preventing failures. Strain sensors, such as optical strain sensors or electrical strain sensors are commonly used for this purpose. However, these sensors face several challenges when used in real-world conditions.

For example, sensor placement and adhesion to the surface can affect measurement reliability, particularly in large or curved structures. Another example, environmental factors can introduce measurement inaccuracies. In addition, sensor may degrade over time due to environmental exposure and fatigue which may lead to drift and inaccurate readings, necessitating frequent calibration or replacement.

There is a need for an improved strain measurement system, and a corresponding method that can address at least some of the abovementioned challenges.

### SUMMARY

Environmental factors, such as temperature variations, can affect an accuracy of strain measurements. A structure, subjected to strain measurements, can be sensitive to temperature. A coefficient of thermal expansion (CTE) value of such structure may be known. However, in real-world conditions, the CTE value of the structure may also be different from the one known due to e.g. imperfections in the structure material.

It is an object of the present invention to provide a method for calculating temperature-compensated strain of a structure in a precise, and reliable manner. It is another object of the present invention to provide a system for calculating temperature-compensated strain of a wind turbine component in a simple, user-friendly and accurate manner.

According to a first aspect of the invention, a computer-implemented method for calculating temperature-compensated strain of a body is provided. The method comprises, during a time period, obtaining time resolved strain measurement data by a strain sensor arranged at the body. The method comprises, during a time period, obtaining time resolved temperature measurement data by a temperature sensor. The temperature sensor is configured to measure a temperature of an environment surrounding the body. The method comprises analysing the time resolved strain measurement data and the time resolved temperature measurement data by a machine learning model. The machine learning model is trained to identify a relation between the time resolved strain measurement data and the time resolved temperature measurement data and to calculate the temperature-compensated strain of the body.

The computer-implemented method may involve the use of a computer or a programmable apparatus. The body may be any structure. Examples of structures are civil engineering structures, aerospace structures, mechanical and automotive structures, marine and offshore structures, industrial structures, or biomedical structures. The body may be a wind turbine component.

The time period may be any time period. The time period may correspond to a period in hours, days, weeks or years. For example, the time period may be an hour. Another example, the time period may be a day. Yet another example, the time period may be a week. Yet another example, the time period may be a month. Yet another example, the time period may be a year. The time period may be adjusted as desired.

The strain sensor is arranged at the body. The strain sensor may be arranged at the body such that it may be rigidly fixed to the body. The strain sensor may be arranged at the body in a manner known in the field. The strain sensor may be arranged on/onto/over/in/into/under the body. The strain sensor may be any conventional and commercially-available strain sensor. The strain sensor may be an optical strain sensor. The strain sensor may be an electrical strain sensor. The strain sensor may be configured to measure strain of the body. The strain sensor may comprise a plurality of strain sensors. The sensors of the plurality of strain sensors may be similar to one another. The sensors of the plurality of strain sensors need not be similar to one another.

The temperature sensor may be arranged in proximity to the strain sensor. The temperature sensor may be arranged adjacent, nearby, in vicinity, or close by the strain sensor. The temperature sensor may be any conventional and commercially-available temperature sensor. The temperature sensor may be an electrical temperature sensor. The temperature sensor may be an optical temperature sensor. The temperature sensor is configured to measure the temperature of the environment surrounding the body. The temperature sensor may be configured to measure the temperature of the environment surrounding the temperature sensor. The temperature sensor may be configured to measure the temperature of the environment surrounding the strain sensor. The temperature sensor may comprise a plurality of temperature sensors. The sensors of the plurality of temperature sensors may be similar to one another. The sensors of the plurality of temperature sensors need not be similar to one another.

The time resolved strain measurement data and the time resolved temperature measurement data may be inputted into the computer. The time resolved strain measurement data and the time resolved temperature measurement data may be inputted into the machine learning model of the computer. The time resolved strain measurement data and the time resolved temperature measurement data may be inputted into the machine learning model of the computer in an automated manner. The method comprises analysing the time resolved strain measurement data and the time resolved temperature measurement data by the machine learning model. The machine learning model may be a deep learning model, a reinforcement learning model, a supervised learning model, an unsupervised learning model, a semi-supervised learning model, a linear regression model, or a support vector machine (SVM) model. The machine learning model is trained to identify a relation between the time resolved strain measurement data and the time resolved temperature measurement data. The machine learning model may be trained to identify a correlation between the time resolved strain measurement data and the time resolved temperature measurement data. Thereby, the machine learning model allows for identifying the relation/correlation in a fast, efficient, precise, accurate, cost-effective, and automated manner.

The machine learning model is trained to calculate the temperature-compensated strain of the body. Thereby, the machine learning model allows for eliminating, or at least reducing, influences in the time resolved strain measurement data due to temperature dependency of the body.

In overall, the computer-implemented method allows for calculating the temperature-compensated strain of the body in a fast, accurate, precise, reliable, cost-effective, and automated manner. The method further allows for monitoring/controlling the body in an improved manner, as the method allows for e.g. detecting early signs of fatigue due to e.g. mechanical load or stress. Thereby, the method allows for monitoring/controlling the body in an efficient, reliable, automated, and cost-effective manner. This aspect may further present the same or similar advantages as defined below in relation to the second and the third aspects of the invention.

By the time resolved temperature measurement data is hereby meant the temperature measurement data recorded/obtained by the temperature sensor during/over the time period. By the time resolved strain measurement data is hereby meant the strain measurement data recorded/obtained by the strain sensor during/over the time period. By the term temperature-compensated strain of the body is hereby meant the temperature-compensated strain measurement data of the body.

By the temperature-compensated strain is hereby meant a strain where the influence of temperature, such as thermal stresses in the structure material, is at least partially removed.

The method may further comprise setting the time period such that the time resolved temperature measurement data may exhibit a temperature variation of at least 5 °C over the time. The temperature variation of at least 5 °C over the time period may allow for identifying the relation/correlation between the time resolved strain measurement data and the time resolved temperature measurement data in an even more accurate, precise, and reliable manner. Thereby, the temperature variation of at least 5 °C over the time period may allow for calculating the temperature-compensated strain of the body in an even more accurate, precise, and reliable manner. The setting of the time period may allow for an even more improved method in terms of flexibility and user-friendliness. The setting of the time may be performed by the machine learning model. For instance, the machine learning model may monitor the obtained time resolved temperature measurement data. The machine learning model may terminate the time period when the obtained time resolved temperature measurement data exhibits the temperature variation of 5 °C or more.

The machine learning model may be trained to identify the relation between the time resolved strain measurement data and the time resolved temperature measurement data to obtain a temperature induced strain part of the measurement data.

Thereby, the machine learning model may allow for subtracting the obtained temperature induced strain part of the measurement data from the obtained time resolved strain measurement data to calculate a mechanical induced strain part of the measurement data i.e. the temperature-compensated strain of the body.

The mechanical induced strain part of the measurement data i.e. the temperature-compensated strain of the body may be calculated based on the following equation: ${Strain}_{Mechanical} = {Strain}_{Total} - Δ Temperature ∗ CTE$

The *Strain_{Mechanica}* corresponds to mechanical induced strain part of the measurement data and has a unit of 10^-6 m/m. The *Strain_{Total}* corresponds to the obtained time resolved strain measurement data and has a unit of 10^-6 m/m. The *ΔTemperature* corresponds to variation of the temperature during the time period which may be measured in degree Celsius (°C) or Kelvin (K). The *CTE* corresponds to a first coefficient of thermal expansion (CTE) of the body e.g. provided by a manufacturer and has a unit of (10^-6 m/m)/°C or (10^-6 m/m)/K.

The method may further comprise training the machine learning model in accordance with the calculated temperature-compensated strain of the body. The method may train the machine learning model over time in accordance with the calculated temperature-compensated strain of the body. Thereby, the training allows for providing an even more improved method in terms of automation, efficiency, accuracy, consistency, scalability, adaptability, and cost-effectiveness. The training of the model may comprise providing the model with a scheme for updating the model in a desired manner e.g. updating a number of iterations.

The relation between the time resolved strain measurement data and time resolved temperature measurement data may be a linear relation. The machine learning model may be trained to identify the linear relation between the time resolved strain measurement data and the time resolved temperature measurement data. The machine learning model may be trained to identify the linear correlation between the time resolved strain measurement data and the time resolved temperature measurement data. The machine learning model may be trained to identify a slope/gradient of the linear relation/correlation between the time resolved strain measurement data and the time resolved temperature measurement data. The identified slope/gradient of the linear relation/correlation between the time resolved strain measurement data and the time resolved temperature measurement data may in turn allow for obtaining the temperature induced strain part of the time resolved strain measurement data. Thereby, it may allow for subtracting the temperature induced strain part of the time resolved strain measurement data from the time resolved strain measurement data to calculate the mechanical induced strain part of the measurement data i.e. the temperature-compensated strain of the body, according to the equation above.

The method may comprise obtaining the time resolved strain measurement data using a first coefficient of thermal expansion (CTE) of the body. The method may comprise obtaining the time resolved strain measurement data using a first CTE value of the body. The model may be provided with the first CTE value of the body. The first CTE value of the body may correspond to a pre-set CTE value in the model. The first CTE value of the body may be provided by a manufacturer of the body.

The method may further comprise calculating a second coefficient of thermal expansion (CTE) of the body. The method may calculate the second CTE value using the identified relation between the time resolved strain measurement data and time resolved temperature measurement data. The method may calculate the second CTE value using the identified linear relation between the time resolved strain measurement data and time resolved temperature measurement data. The method may calculate the second CTE value using the identified slope/gradient of the linear relation between the time resolved strain measurement data and time resolved temperature measurement data. The first CTE value of the body may be updated to the second CTE value of the body. Thereby, the method may allow for calculating the temperature-compensated strain of the body by calculating the second CTE value of the body. The temperature induced strain part of the measurement data may be calculated by identifying the second CTE of the body.

The analysing may comprise filtering the time resolved temperature measurement data and the time resolved strain measurement data based on predetermined requirements. The filtering of the time resolved temperature measurement data may allow for eliminating unnecessary/scattered measurement data which are not strain-related. Thereby, the filtering of the time resolved temperature measurement data may allow for improving the method in terms of accuracy, stability and reliability. The filtering of the time resolved temperature measurement data may further allow for training the machine learning model based on real strain measurement data and not overfitting to anomalies or noise.

The filtering of the time resolved temperature measurement data and the time resolved strain measurement data may be performed based on any of or any combination of the following predetermined requirements when the body is a wind turbine component. A rotor speed may be at or below idling speed which may itself depend on a type of the wind turbine. For instance, a rotor speed may be at or below a first limit such as 2 rpm. The first limit for the rotor speed may allow for eliminating, or at least reducing, an influence of the rotor speed on the obtained time resolved strain measurement data inputted into the machine learning model. A wind speed may be below cut-in wind speed. For instance, a wind speed may be at or below a second limit such as 3 m/s. Thereby, the time resolved strain measurement and the time resolved temperature measurement may be performed when the wind speed is at or below the second limit. The second limit for the wind speed may allow for eliminating, or at least reducing, an influence of the wind speed on the obtained time resolved strain measurement data inputted into the machine learning model.

A yaw misalignment may be below a third limit such as below 45 degrees or below 25 degrees or below 10 degrees. The third limit for the yaw misalignment may allow for eliminating, or at least reducing, an influence of the yaw misalignment on the obtained time resolved strain measurement data inputted into the machine learning model. A pitch angle may be any angle. The pitch angle may be constant during measurement for temperature compensation. This may allow for eliminating, or at least reducing, an influence of the pitch angle on the obtained time resolved strain measurement data inputted into the machine learning model.

By eliminating, or at least reducing, the influence is hereby meant that the influence may be much lower, compared to an influence of 1°C temperature change such as 50% lower or even more than 50% lower, compared to the influence of 1°C temperature change.

According to a second aspect of the invention, a system for calculating temperature-compensated strain of a wind turbine component is provided. The system comprises a strain sensor. The strain sensor is arranged at the wind turbine component. The strain sensor is configured to obtain time resolved strain measurement data during a time period. The system comprises a temperature sensor. The temperature sensor is configured to obtain time resolved temperature measurement data of an environment surrounding the component during the time period. The system comprises a circuitry. The circuitry is configured to analyse the time resolved strain measurement data and the time resolved temperature measurement data by a machine learning model. The machine learning model is trained to identify a relation between the time resolved strain measurement data and the time resolved temperature measurement data and to calculate the temperature-compensated strain of the wind turbine component. The circuitry may be configured to receive the obtained time resolved strain measurement data and the obtained time resolved temperature measurement data. The time resolved strain measurement data and the time resolved temperature measurement data may be inputted into the circuitry. The time resolved strain measurement data and the time resolved temperature measurement data may be inputted into the machine learning model of the circuitry. The time resolved strain measurement data and the time resolved temperature measurement data may be inputted into the machine learning model of the circuitry in an automated manner. The circuitry may be configured to carry out overall control of the system.

The circuitry may comprise a processor, such as a central processing unit, CPU, a graphics processing unit, GPU, a microcontroller, or a microprocessor. The processor may be configured to execute program code stored in a memory, in order to carry out functions and operations of the system. The memory may be one or more of a buffer, a flash memory, a hard drive, a removable medium, a volatile memory, a non-volatile memory, a random access memory, RAM, or another suitable memory unit. In a typical arrangement, the memory may comprise a non-volatile memory for long term data storage and a volatile memory that functions as system memory for the circuitry. The memory may exchange data with the circuitry over a data bus. Accompanying control lines and an address bus between the memory and the circuitry also may be present.

Functions and operations of the system may be embodied in the form of executable logic routines (e.g., lines of code, software programs, etc.) that are stored on a non-transitory computer readable medium (e.g., the memory) of the system and are executed by the circuitry. Furthermore, the functions and operations of the system may be a stand-alone software application or form a part of a software application that carries out additional tasks related to the system. The described functions and operations may be considered a method, as defined in relation to the first aspect of the invention, that the corresponding part of the system is configured to carry out. Also, while the described functions and operations may be implemented in software, such functionality may as well be carried out via dedicated hardware or firmware, or some combination of hardware, firmware and/or software. This aspect may generally present the same or similar advantages as defined above in relation to the first aspect of the invention.

According to a third aspect of the invention, a non-transitory computer-readable storage medium is provided. The non-transitory computer-readable storage medium comprises instructions which, when executed by a circuitry, cause the circuitry to carry out the method, defined above in relation with the first aspect of the invention. This aspect may generally present the same or similar advantages as defined above in relation to the first and the second aspects of the invention.

The wind turbine component may comprise any of a wind turbine blade, a wind turbine tower, a wind turbine main bearing, a wind turbine bedframe. The wind turbine component may be any component of a wind turbine which requires strain measurement. The strain sensor is arranged at the wind turbine component. In the case of the wind turbine blade, the strain sensor may be arranged anywhere on/onto/over/in/into/under the wind turbine blade. For instance, the strain sensor may be arranged at a tip of the blade or at a root of the blade.

The strain sensor may be an optical strain sensor. Alternatively or in combination, the strain sensor may be an electrical strain sensor. The electrical strain sensor may comprise any of a half Wheatstone bridge electrical strain gauge sensor, a quarter Wheatstone bridge electrical strain gauge sensor, or a full Wheatstone bridge electrical strain gauge sensor. The strain sensor may comprise a plurality of strain sensors. For instance, the strain sensor may comprise two strain sensors. One of the two strain sensors may be an electrical strain sensor. The other one of the two strain sensors may be an optical strain sensor. The plurality of strain sensors may allow for calculating the temperature-compensated strain of the wind turbine component at various locations/positions as desired. In the case of plurality of strain sensors, they may be a distance between each two neighbouring sensors.

The temperature sensor may comprise an electrical temperature sensor. Alternatively or in combination, the temperature sensor may comprise an optical temperature sensor. The temperature sensor may comprise a plurality of temperature sensors. For instance, the temperature sensor may comprise two temperature sensors. One of the two temperature sensors may be an electrical temperature sensor. The other one of the two temperature sensors may be an optical temperature sensor. The plurality of temperature sensors may allow for calculating the temperature-compensated strain of the wind turbine component at various locations/positions as desired. In the case of plurality of temperatures sensors, they may be a distance between each two neighbouring sensors.

The temperature sensor may be arranged where temperature gradient is linear with respect to temperature gradient of the wind turbine component. Thereby, the temperature sensor may record/obtain the time resolved temperature measurement data that the wind turbine component experiences/undergoes/encounters. This in turn may allow for calculating the temperature-compensated strain of the wind turbine component in an even more precise, accurate and reliable manner.

The temperature sensor may be arranged in proximity to the strain sensor. A distance between the strain sensor and the temperature sensor may be in the range of 1 mm to 30 m. The temperature sensor may be arranged next to the strain sensor. The temperature sensor may be arranged in vicinity of the strain sensor. The temperature sensor may be arranged in the environment surrounding the wind turbine component. For instance, the temperature sensor may be arranged may be arranged in the air surrounding the wind turbine component.

The distance between the strain sensor and the temperature sensor may be in the range of 1 mm to 30 m. The distance between the strain sensor and the temperature sensor may be in the range of 1 mm to 20 m. The distance between the strain sensor and the temperature sensor may be in the range of 1 mm to 10 m. The distance between the strain sensor and the temperature sensor may be in the range of 1 mm to 5 m. The distance between the strain sensor and the temperature sensor may be in the range of 1 mm to 2,5 m. The distance between the strain sensor and the temperature sensor may be in the range of 1 mm to 1 m. The distance between the strain sensor and the temperature sensor may be in the range of 1 mm to 50 cm. The distance between the strain sensor and the temperature sensor may be in the range of 1 mm to 25 cm. The distance between the strain sensor and the temperature sensor may be in the range of 1 mm to 10 cm.

The distance may be selected based on the wind turbine component properties such as composition of the wind turbine component. For example, for the wind turbine components which comprise/are made of steel such as the bedframe, the tower or the main bearing, the temperature sensor may be arranged next to the strain sensor at/on the metal part. For such steel parts, the distance between the strain sensor and the temperature sensor may be in the range of 1 mm to 300 mm. This in turn may allow for eliminating, or at least reducing, a difference in thermal conductivity of the steel part, due to variation within the steel part under different conditions e.g. temperatures. Another example, for the wind turbine components which comprise/are made of composites such as the blade, the distance between the strain sensor and the temperature sensor may be in the range of 1 mm to 30 m.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a", "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
Fig. 1 shows a system for calculating temperature-compensated strain of a wind turbine component.
Fig. 2 is a block diagram of a computer-implemented method for calculating temperature-compensated strain of a body.
Fig. 3 shows an example of calculated bending moment versus temperature for a wind turbine component.
Fig. 4 shows the data of Fig. 3 wherein the data are temperature-compensated.

### DETAILED DESCRIPTION OF THE DRAWINGS

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

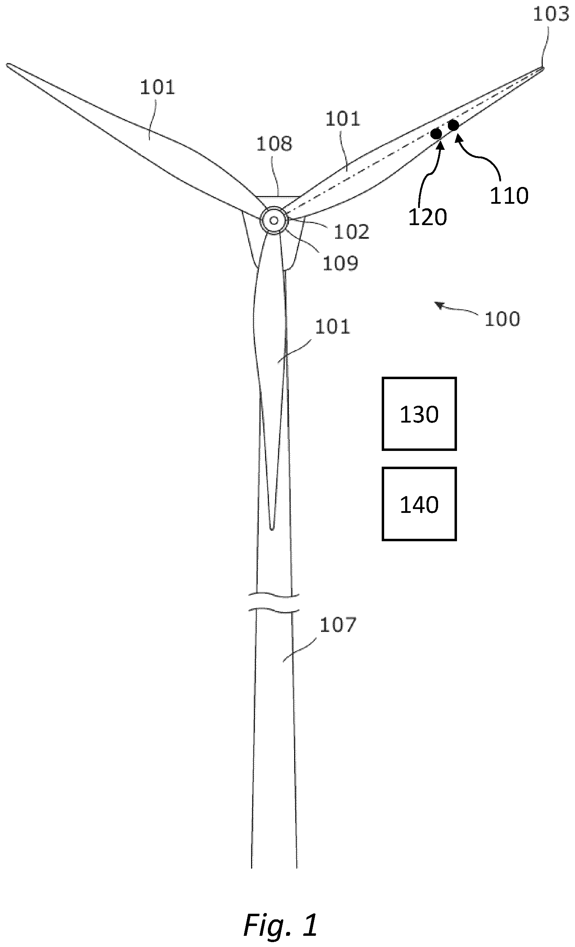

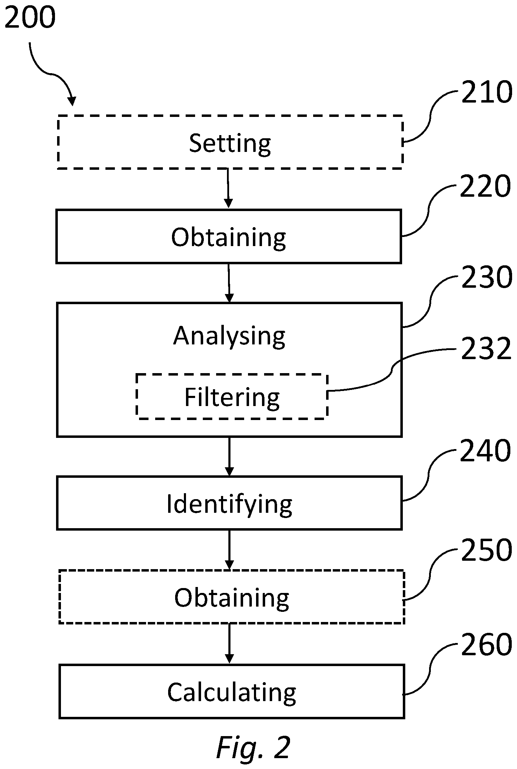

Fig. 1 shows a system 100 for calculating temperature-compensated strain of a wind turbine component 101, 102, 103, 107, 108, 109. The wind turbine component 101, 102, 103, 107, 108, 109 may comprise a tower 107, a nacelle 108, a wind turbine blade 101. The wind turbine blade 101 may comprise a root end 102 connected to a hub 109 and a tip end 103. The system 100 comprises a strain sensor 110. The strain sensor 110 is arranged at the wind turbine component 101, 102, 103, 107, 108, 109. Fig. 1 shows that the strain sensor 110 is arranged at the wind turbine blade 101. The strain sensor 110 is configured to obtain 220 time resolved strain measurement data during a time period T. The system 100 comprises a temperature sensor 120. The temperature sensor 120 may be arranged in proximity to the strain sensor 110. The temperature sensor 120 may be configured to obtain 220 time resolved temperature measurement data of an environment surrounding the component 101, 102, 103, 107, 108, 109 during the time period T. The system 100 comprises a circuitry 130. The circuitry 130 is configured to analyse 230 the time resolved strain measurement data and the time resolved temperature measurement data by a machine learning model M. The machine learning model M is trained to identify 240 a relation between the time resolved strain measurement data and the time resolved temperature measurement data and to calculate 260 the temperature-compensated strain of the wind turbine component 101, 102, 103, 107, 108, 109. The system 100 may perform according to a method 200, defined below in relation to Fig. 2.

Fig. 1 also shows a non-transitory computer-readable storage medium 140 comprising instructions which, when executed by a circuitry 130, cause the circuitry 130 to carry out the method 200 as defined in relation to Fig. 2 below.

Fig. 2 shows a block diagram of a computer-implemented method 200 for calculating temperature-compensated strain of a body. The body may be any structure such as a wind turbine component 101, 102, 103, 107, 108, 109.

The method 200 comprises, during a time period T, obtaining 220 time resolved strain measurement data by a strain sensor 110 arranged at the body. The method comprises, during a time period T, obtaining 220 time resolved temperature measurement data by a temperature sensor 120. The method 200 may comprises setting 210 the time period T such that the time resolved temperature measurement data exhibit a temperature variation of at least 5 °C over the time. The temperature sensor 120 is configured to measure a temperature of an environment surrounding the body. The method 200 comprises analysing 230 the time resolved strain measurement data and the time resolved temperature measurement data by a machine learning model M. The analysing 230 may comprise filtering 232 the time resolved temperature measurement data and the time resolved strain measurement data based on predetermined requirements. The machine learning model M is trained to identify 240 a relation between the time resolved strain measurement data and the time resolved temperature measurement data. The machine learning model M may be trained to identify 240 the relation between the time resolved strain measurement data and the time resolved temperature measurement data to obtain 250 a temperature induced strain part of the time resolved strain measurement data.

The machine learning model M is trained to calculate 260 the temperature-compensated strain of the body. The method 200 may be performed in the same order, as shown in Fig. 2. The method 200 need not be performed in the same order, as shown in Fig. 2. For instance, the analysing 230, the identifying 240 and the calculating 260 may be performed simultaneously. The method 200 may be performed by a system 100, defined above in relation to Fig. 1.

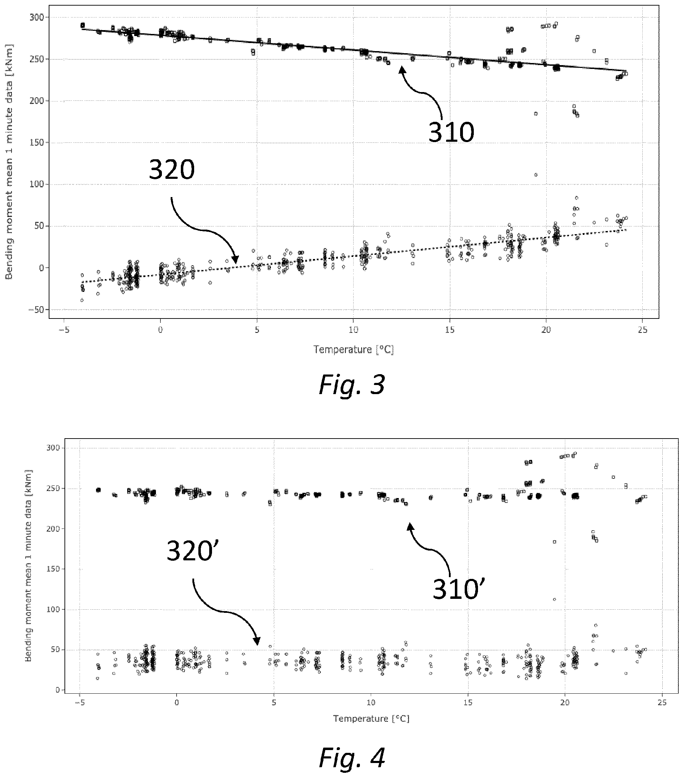

Fig. 3 shows an example of calculated bending moment versus temperature for a wind turbine component 101, 102, 103, 107, 108, 109. The bending moment is calculated, based on obtained time resolved strain measurement data, via a calibration. The calibration, in this specific case, is done by pulling the blade 101 towards the wind turbine tower 107, with a known load while measuring the strain. The calibration calculation is done according to IEC-61400-13:2016.. The strain measurement is performed using an electrical strain sensor. The measurements, shown in Fig. 3, is performed using a full Wheatstone bridge electrical strain sensor. The first CTE value is set to 10.9 (10^-6 m/m)/K. The graph 310 corresponds to a flap-wise strain measurement. The graph 320 corresponds to an edge-wise strain measurement. The measurements shown in the graphs 310 and 320 are filtered based on the following predetermined requirements. A rotor speed is set to 4 rpm, a pitch is set to 4degree of a specified idling pitch angle of the turbine.

In Fig. 3, the graphs 310 and 320 show a linear relation between the bending moment related to the time resolved strain measurement data and the time resolved temperature measurement data, see the solid line and the dashed-line, respectively. The graphs 310 and 320 show that the bending moment related to the time resolved strain measurement data is not compensated, as the linear solid line and the linear dashed-line show a slop/gradient.

Fig. 4 shows the data of Fig. 3 wherein the data are temperature-compensated. The graph 310' corresponds to the temperature compensated flap-wise strain measurement shown in graph 310. The graph 320' corresponds to the temperature compensated edge-wise strain measurement shown in graph 320. The graphs 310' and 320' are calculated using the method shown in Fig. 2.

### Items

1. A computer-implemented method (200) for calculating (260) temperature-compensated strain of a body, the method (200) comprising:
   during a time period (T), obtaining (220) time resolved strain measurement data by a strain sensor (110) arranged at the body and obtaining time resolved temperature measurement data by a temperature sensor (120) configured to measure a temperature of an environment surrounding the body,
   analysing (230) the time resolved strain measurement data and the time resolved temperature measurement data by a machine learning model (M) trained to identify (240) a relation between the time resolved strain measurement data and the time resolved temperature measurement data and to calculate (260) the temperature-compensated strain of the body.
2. The computer-implemented method (200) according to item 1, wherein the method (200) further comprises setting (210) the time period (T) such that the time resolved temperature measurement data exhibit a temperature variation of at least 5 °C over the time.
3. The computer-implemented method (200) according to item 1 or 2, wherein the machine learning model (M) is trained to identify (240) the relation between the time resolved strain measurement data and the time resolved temperature measurement data to obtain (250) a temperature induced strain part of the time resolved strain measurement data.
4. The computer-implemented method (200) according to any of the preceding items, wherein the method (200) further comprises training the machine learning model (M) in accordance with the calculated temperature-compensated strain of the body.
5. The computer-implemented method (200) according to any of the preceding items, wherein the relation between the time resolved strain measurement data and time resolved temperature measurement data is a linear relation.
6. The computer-implemented method (200) according to any of the preceding items, wherein the method (200) comprises obtaining (220) time resolved strain measurement using a first coefficient of thermal expansion, CTE, of the body.
7. The computer-implemented method (200) according to any of the preceding items, wherein the method (200) further comprises calculating (260) a second coefficient of thermal expansion, CTE, of the body.
8. The computer-implemented method (200) according to any of the preceding items, wherein the analysing (230) comprises filtering (232) the time resolved temperature measurement data and the time resolved strain measurement data based on predetermined requirements.
9. The computer-implemented method (200) according to any of the preceding items, wherein the machine learning model (M) is a deep learning model, a reinforcement learning model, a supervised learning model, an unsupervised learning model, a semi-supervised learning model, a linear regression model, or a support vector machine (SVM) model.
10. A non-transitory computer-readable storage medium (140) comprising instructions which, when executed by a circuitry (130), cause the circuitry (130) to carry out the method (200) according to any of the items 1-9.
11. A system (100) for calculating temperature-compensated strain of a wind turbine component (101, 102, 103, 107, 108, 109), the system (100) comprising:
   a strain sensor (110) arranged at the wind turbine component (101, 102, 103, 107, 108, 109) and configured to obtain (220) time resolved strain measurement data during a time period (T),
   a temperature sensor (120) arranged in proximity to the strain sensor (110) and configured to obtain (220) time resolved temperature measurement data of an environment surrounding the component (101, 102, 103, 107, 108, 109) during the time period (T),
   a circuitry (130) configured to analyse (230) the time resolved strain measurement data and the time resolved temperature measurement data by a machine learning model (M) trained to identify (240) a relation between the time resolved strain measurement data and the time resolved temperature measurement data and to calculate (260) the temperature-compensated strain of the wind turbine component (101, 102, 103, 107, 108, 109).
12. The system (100) according to item 11, wherein the wind turbine component (101, 102, 103, 107, 108, 109) comprises any of a wind turbine blade (101), a wind turbine tower (107), a wind turbine main bearing (109), a wind turbine bedframe (108).
13. The system (100) according to item 11 or 12, wherein the strain sensor (110) is an optical strain sensor and/or an electrical strain sensor, wherein the electrical strain sensor comprises any of a half Wheatstone bridge electrical strain gauge sensor, a quarter Wheatstone bridge electrical strain gauge sensor, or a full Wheatstone bridge electrical strain gauge sensor.
14. The system (100) according to any of the items 11-13, wherein the temperature sensor (120) comprises an electrical temperature sensor and/or an optical temperature sensor.
15. The system (100) according to any of the items 10-14, wherein the temperature sensor (120) is arranged where temperature gradient is linear with respect to temperature gradient of the body.
16. The system (100) according to any of the items 10-15, wherein the temperature sensor (120) is arranged in proximity to the strain sensor (110), and wherein a distance between the strain sensor (110) and the temperature sensor (120) is in the range of 1 mm to 30 m.

### REFERENCES

- 100: Wind turbine
- 101: Wind turbine blade
- 102: Root end
- 103: Tip end
- 107: Tower
- 108: wind turbine bedframe
- 109: wind turbine main bearing
- 110: Strain sensor
- 120: Temperature sensor
- 130: Circuitry
- 140: Non-transitory computer-readable storage medium
- M: Machine learning model
- T: Time period
- 200: Method
- 210: Setting
- 220: Obtaining
- 230: Analysing
- 232: Filtering
- 240: Identifying
- 250: Obtaining
- 260: Calculating
- 310: Flap-wise strain measurement
- 310': Temperature compensated flap-wise strain measurement
- 320: Edge-wise strain measurement
- 320': Temperature compensated edge-wise strain measurement

## Claims

1. A computer-implemented method (200) for calculating (260) temperature-compensated strain of a body, the method (200) comprising:
during a time period (T), obtaining (220) time resolved strain measurement data by a strain sensor (110) arranged at the body and obtaining time resolved temperature measurement data by a temperature sensor (120) configured to measure a temperature of an environment surrounding the body,
analysing (230) the time resolved strain measurement data and the time resolved temperature measurement data by a machine learning model (M) trained to identify (240) a relation between the time resolved strain measurement data and the time resolved temperature measurement data and to calculate (260) the temperature-compensated strain of the body.

2. The computer-implemented method (200) according to claim 1, wherein the method (200) further comprises setting (210) the time period (T) such that the time resolved temperature measurement data exhibit a temperature variation of at least 5 °C over the time.

3. The computer-implemented method (200) according to claim 1 or 2, wherein the machine learning model (M) is trained to identify (240) the relation between the time resolved strain measurement data and the time resolved temperature measurement data to obtain (250) a temperature induced strain part of the time resolved strain measurement data.

4. The computer-implemented method (200) according to any of the preceding claims, wherein the method (200) further comprises training the machine learning model (M) in accordance with the calculated temperature-compensated strain of the body.

5. The computer-implemented method (200) according to any of the preceding claims, wherein the relation between the time resolved strain measurement data and time resolved temperature measurement data is a linear relation.

6. The computer-implemented method (200) according to any of the preceding claims, wherein the method (200) comprises obtaining (220) time resolved strain measurement using a first coefficient of thermal expansion, CTE, of the body.

7. The computer-implemented method (200) according to any of the preceding claims, wherein the method (200) further comprises calculating (260) a second coefficient of thermal expansion, CTE, of the body.

8. The computer-implemented method (200) according to any of the preceding claims, wherein the analysing (230) comprises filtering (232) the time resolved temperature measurement data and the time resolved strain measurement data based on predetermined requirements.

9. A non-transitory computer-readable storage medium (140) comprising instructions which, when executed by a circuitry (130), cause the circuitry (130) to carry out the method (200) according to any of the claims 1-8.

10. A system (100) for calculating temperature-compensated strain of a wind turbine component (101, 102, 103, 107, 108, 109), the system (100) comprising:
a strain sensor (110) arranged at the wind turbine component (101, 102, 103, 107, 108, 109) and configured to obtain (220) time resolved strain measurement data during a time period (T),
a temperature sensor (120) arranged in proximity to the strain sensor (110) and configured to obtain (220) time resolved temperature measurement data of an environment surrounding the component (101, 102, 103, 107, 108, 109) during the time period (T),
a circuitry (130) configured to analyse (230) the time resolved strain measurement data and the time resolved temperature measurement data by a machine learning model (M) trained to identify (240) a relation between the time resolved strain measurement data and the time resolved temperature measurement data and to calculate (260) the temperature-compensated strain of the wind turbine component (101, 102, 103, 107, 108, 109).

11. The system (100) according to claim 10, wherein the wind turbine component (101, 102, 103, 107, 108, 109) comprises any of a wind turbine blade (101), a wind turbine tower (107), a wind turbine main bearing (109), a wind turbine bedframe (108).

12. The system (100) according to claim 10 or 11, wherein the strain sensor (110) is an optical strain sensor and/or an electrical strain sensor, wherein the electrical strain sensor comprises any of a half Wheatstone bridge electrical strain gauge sensor, a quarter Wheatstone bridge electrical strain gauge sensor, or a full Wheatstone bridge electrical strain gauge sensor.

13. The system (100) according to any of the claims 10-12, wherein the temperature sensor (120) comprises an electrical temperature sensor and/or an optical temperature sensor.

14. The system (100) according to any of the claims 9-13, wherein the temperature sensor (120) is arranged where temperature gradient is linear with respect to temperature gradient of the body.

15. The system (100) according to any of the claims 9-14, wherein the temperature sensor (120) is arranged in proximity to the strain sensor (110), and wherein a distance between the strain sensor (110) and the temperature sensor (120) is in the range of 1 mm to 30 m.
